Europäisches Patentamt

European Patent Office

Office européen des brevets

(11) Veröffentlichungsnummer: **0 386 281**
**A1**

# (12) EUROPÄISCHE PATENTANMELDUNG

(21) Anmeldenummer: 89103916.6

(22) Anmeldetag: 06.03.89

(51) Int. Cl.⁵: **G06F  15/16**

(43) Veröffentlichungstag der Anmeldung:
**12.09.90 Patentblatt  90/37**

(84) Benannte Vertragsstaaten:
**DE FR GB**

(71) Anmelder: **Siemens Aktiengesellschaft**
**Wittelsbacherplatz 2**
**D-8000 München 2(DE)**

(72) Erfinder: **Brehm, Herbert, Ing. grad.**
**Ebersbach 41**
**D-8524 Neunkirchen a. Br.(DE)**
Erfinder: **Elsas, Hartmut, Dipl.-Ing.**
**Im Heuschlag 25**
**D-8520 Erlangen(DE)**
Erfinder: **Greiner, Hans-Joachim, Dipl.-Ing.**
**Am Eichengarten 1**
**D-8520 Erlangen(DE)**
Erfinder: **Koellner, Richard, Dipl.-Ing.**
**Siedlerstrase 38**
**D-8521 Weisendorf(DE)**

(54) **Kommunikationssystem.**

(57) Es soll ein Kommunikationssystem mit mehreren Anlagenkomponenten (2) und einer Basiskommunikation (5) so ausgebildet werden, daß ein Austausch, Entfernen oder Hinzufügen von Anlagenkomponenten (2) ohne Änderung der Software- oder Hardware-Konfiguration bei den anderen Anlagenkomponenten (2) möglich ist, wobei die Belastung des Datennetzes minimiert ist.

Jeder Komponentenfunktion ist je ein bestimmter Funktionskanal zugeordnet, über den Funktionsinformationen gesendet und empfangen werden.

FIG 1

EP 0 386 281 A1

## Kommunikationssystem

Die Erfindung betrifft ein Kommunikationssystem mit mehreren Anlagenkomponenten und einer Basiskommunikation, welche zu einem Netzwerk zusammengeschaltet sind.

Ein Kommunikationssystem dieser Art kann als Anlagenkomponenten beispielsweise Röntgengeräte enthalten, welche über die Basiskommunikation gesteuert werden.

Wenn Komponenten über ein Kommunikationsnetzwerk miteinander verbunden werden, muß bei dem Stand der Technik bei der Kommunikation entweder der Empfänger explizit angegeben werden oder es wird anonym an alle Anlagenkomponenten gesendet (Broadcast). Der erste Fall erfordert bei Änderungen in der Anlage auch eine Konfigurationsänderung der einzelnen Anlagenkomponenten, der zweite Fall bedeutet eine hohe Belastung des Datennetzes.

Der Erfindung liegt die Aufgabe zugrunde, ein Kommunikationssystem der eingangs genannten Art so auszubilden, daß ein Austausch, Entfernen oder Hinzufügen von Anlagenkomponenten ohne Änderung der Software- oder Hardware-Konfiguration bei den anderen Anlagenkomponenten möglich ist, wobei die Belastung des Datennetzes minimiert ist.

Diese Aufgabe ist erfindungsgemäß dadurch gelöst, daß jeder Komponentenfunktion je ein bestimmter Funktionskanal zugeordnet ist, über den Funktionsinformationen gesendet und empfangen werden. Bei dem erfindungsgemäßen Kommunikationssystem erfolgt die Adressierung über Funktionskanäle. Jeder Komponentenfunktion wird ein bestimmter Funktionskanal zugeordnet. Eine Anlagenkomponente kann einen oder mehrere Funktionskanäle besitzen, die nach Ein- und Ausgabefunktionskanälen unterschieden sein können. Die Zuordnung von Komponentenfunktionen zu den Funktionskanälen ist netzweit festgelegt.

Eine Anlagenkomponente gibt dem Kommunikationssystem bekannt, welche der Funktionskanäle sie als Ausgabe- und welche sie als Eingabekanal nutzen will. Das Kommunikationssystem stellt damit eine Verbindungsliste auf, mit deren Hilfe sie die Empfänger für eine Sendung bestimmt

Vorteile:

- Die einzelnen Anlagekomponenten müssen ihre jeweiligen Empfänger nicht kennen, da die Zuordnung der Gerätefunktionen zu den Empfängern vom Kommunikationssystem vorgenommen wird, ohne daß in jedem Fall ein "Broadcast" (anonyme Sendung an alle Anlagenkomponenten) notwendig ist.

- Eine Anlagenkomponente kann entfernt, hinzugefügt oder ersetzt werden, ohne daß eine Änderung an der Konfiguration an ihr oder einer anderen Anlagenkomponente nötig ist. Das Kommunikationssystem sorgt dynamisch für eine Umorganisation der Verbindung.

- Durch das Kommunikationssystem wird verhindert, daß eine Anlagenkomponente mit einer Funktion beauftragt wird, die sie nicht versteht.

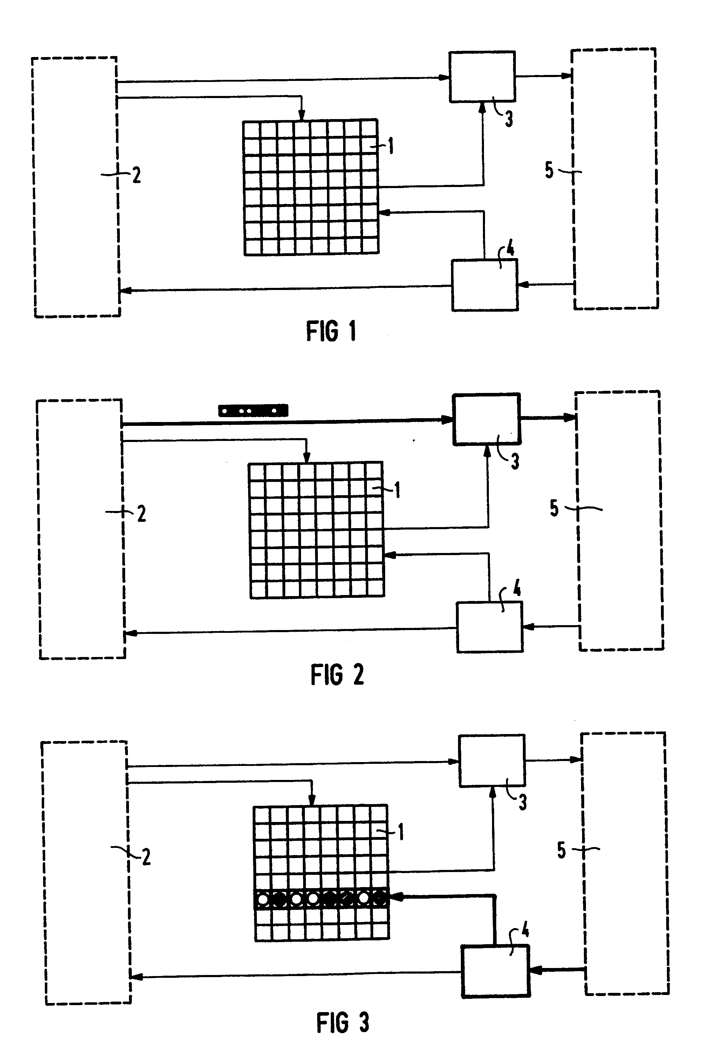

Die Erfindung ist nachfolgend anhand eines in den Fig. 1 bis 5 in verschiedenen Zuständen gezeichneten Ausführungsbeispieles näher erläutert.

Zentraler Teil des Beispieles ist ein Zuordnungsspeicher 1, in dem für eine Anlagenkomponente 2 der Bezug zwischen Funktionskanal und den Empfängern abgelegt ist. Dieser Zuordnungsspeicher 1 ist matrixartig organisiert, im Beispiel: Spaltenindex = Funktionskanäle; Zeilenindex = Empfängeradressen, und wird im Sendeweg benutzt, um die Funktionskanäle in die Empfängerliste umzusetzen.

Die Sendesteuerung 3 versieht die Kanalzuordnung und die Sendung mit Adreßangabe mit einer eindeutigen Kennung. Mit dieser Kennung wird von der Empfangssteuerung 4 erkannt, ob es sich um einen normalen Empfang oder um eine Kanalzuordnung handelt.

Die Basiskommunikation ist mit 5 bezeichnet.

Belegung des Zuordnungsspeichers 1:

Der Zuordnungsspeicher 1 wird initial als leer betrachtet. Es existieren also keine Empfänger für irgendeine Funktion. Durch die Übergabe einer Kanalzuordnung wird bei einer Anlagenkomponente 2 eine spezielle Sendung veranlaßt, die bei den anderen Anlagenkomponenten eine Zeile des Zuordnungsspeichers 1 belegt.

Dies ist der entscheidende Mechanismus der selbständigen Konfiguration. Jede Anlagenkomponente 2 muß nur wissen, welche Fähigkeiten sie selbst hat. Durch die netzweite Sendung der Kanalzuordnung erfahren dies die anderen Anlagenkomponenten 2.

Eine Anlagenkomponente 2 gibt über die Kanalzuordnung bekannt, für welche Funktionskanäle sie als Empfänger fungiert. Diese Information wird über die Sendesteuerung 3 der zugrundeliegenden Basiskommunikation 5 übergeben (Fig. 2).

Die empfangende Anlagenkomponente 2 erhält diese Information und fügt sie in den Zuordnungsspeicher 1 ein (Fig. 3). Es wird dabei vorausgesetzt, daß aus der empfangenen Information die Adresse des Absenders ersichtlich ist.

Die Kanalzuordnung wird auf diese Weise allen beteiligten Anlagenkomponenten 2 im Netz bekannt gemacht. Es erfolgt ein wechselseitiger Austausch dieser Information.

Dieser Vorgang findet insbesondere bei der Initialisierung statt. Er kann jedoch auch jederzeit im späteren normalen Betrieb ablaufen (dynamische Rekonfigurierung).

Normaler Betrieb:

Im Normalbetrieb werden Sendungen von einer Anlagenkomponente 2 veranlaßt, die von denjenigen Anlagenkomponenten 2 empfangen werden, sie sich über die Kanalzuordnung angemeldet haben.

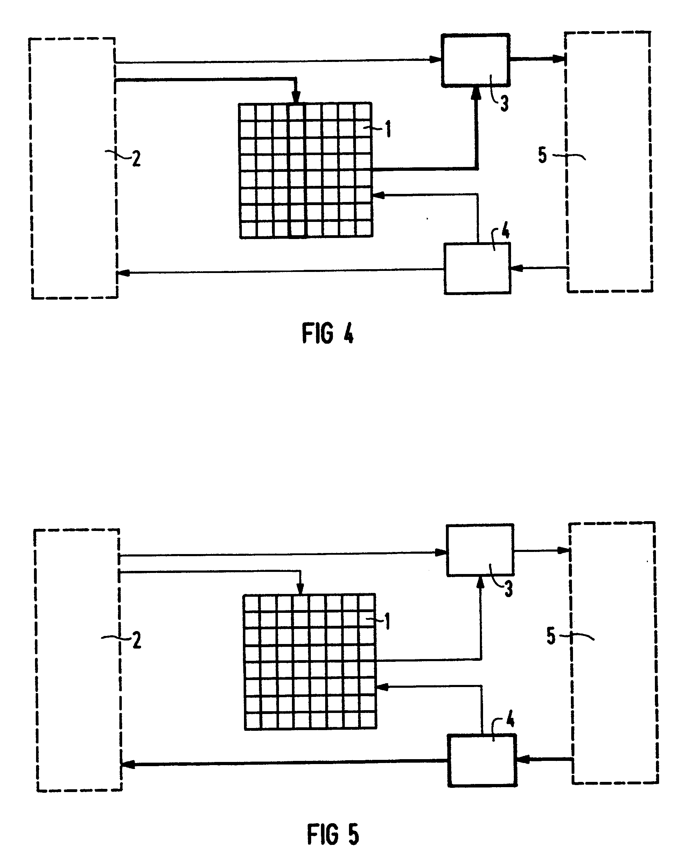

Der Absender veranlaßt eine Sendung, die den Funktionskanal enthält. Über den Zuordnungsspeicher 1 werden diejenigen Anlagenkomponenten 2 festgestellt, die sich im vorigen Schritt als Empfänger eingetragen haben. Das Ergebenis dieser Abfrage ist die Sendung mit (expliziter) Adreßangabe, die über die Sendesteuerung 3 der Basiskommunikation 5 übergeben wird (Fig. 4).

Von der empfangenden Anlagenkomponente 1 wird die Information weitergegeben. Der Funktionskanal kann Teil der übermittelten Information sein; in diesem Fall ist eine Rückübersetzung nicht mehr notwendig (Fig. 5).

In den Fig. 1 bis 5 ist ein lokales Netzwerk mit Ringstruktur vorgesehen; es kann aber jede Art von Netzwerk dafür verwendet werden.

Das Adressierungsschema ist unabhäng vom zugrundeliegenden Basiskommunikationssystem 5

Bei dem beschriebenen Beispiel können einzelne Anlagenkomponenten 2 einer Röntgenanlage miteinander verbunden werden. Weitere Anwendungen sind zum Beispiel die Verbindung von Meßgeräten, die Verbindung von Werkzeugmaschinen in der Fertigungsautomatisierung usw.

## Ansprüche

1. Kommunikationssystem mit mehreren Anlagenkomponenten (2) und einer Basiskommunikation (5), welche zu einem Netzwerk zusammengeschaltet sind, **dadurch gekennzeichnet,** daß jeder Komponentenfunktion je ein bestimmter Funktionskanal zugeordnet ist, über den Funktionsinformationen gesendet und empfangen werden.

2. Kommunikationssystem nach Anspruch 1, **dadurch gekennzeichnet,** daß die Anlagenkomponenten (2) Röntgengeräte sind, welche von der Basiskommunikation (5) gesteuert werden.

FIG 1

FIG 2

FIG 3

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CONTROL ENGINEERING, Band 26, Nr. 11, November 1979, Seiten 53-57; R.H. SHERMAN: "Peer-to-peer communications distributes control among PC's" * Figur, Seite 55; Seite 53, linke Spalte, Zeile 1 - Seite 54, Spalte 2, Zeile 5 * | 1 | G 06 F 15/16 |
| Y | IDEM --- | 2 | |
| Y | JOURNAL OF PHYSICS E/SCIENTIFIC INSTRUMENTS, Band 14, Nr. 2, Februar 1981, Seiten 170-174, Dorking, GB; J. COSIER et al.: "Microprocessor control of high-temperature x-ray diffraction experiments" * Seite 170, linke Spalte, Zeile 1 - Seite 171, rechte Spalte, Zeile 27 * --- | 2 | |
| A | PROCEEDINGS, IEEE INFOCOM 85, Washington, D.C., 26.-28. März 1985, Seiten 349-355, IEEE, New York, US; P. MOCKAPETRIS et al.: "A perspective on name system design" * Seite 349, linke Spalte, Zeile 1 - rechte Spalte, Zeile 19 * --- | 1 | **RECHERCHIERTE SACHGEBIETE (Int. Cl.5)** G 06 F 15/16 |
| A | PROCEEDINGS COMPUTER NETWORKS, COMPCON 82 FALL, Washington, D.C., 20.-23. September 1982, Seiten 681-686, IEEE, New York, US; K.J. KING et al.: "An architecture for local area network servers" * Seite 683, rechte Spalte, Zeile 23 - Seite 684, linke Spalte, Zeile 12 * --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 06-11-1989 | SCHENKELS P.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 658 359 (PALATUCCI)<br>* Figuren 3-8; Seite 5, Zeile 5 - Seite 6, Zeile 10; Seite 11, Zeilen 5-58 *<br>--- | 1 | |
| A | US-A-3 986 169 (KOBAYASHI)<br>* Spalte 1, Zeile 6 - Spalte 2, Zeile 35 *<br>--- | 1 | |
| A | WO-A-8 401 043 (WESTERN ELECTRIC CO. INC.)<br>* Figur 2; Seite 3, Zeile 8 - Seite 4, Zeile 10 *<br>----- | 1 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 06-11-1989 | SCHENKELS P.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............................................................
& : Mitglied der gleichen Patentfamilie, übereinstimmendes Dokument

EPO FORM 1503 03.82 (P0403)